# EUROPÄISCHE PATENTANMELDUNG

(11) **EP 0 933 338 A1**
(43) Veröffentlichungstag der Anmeldung: **04.08.1999**
(21) Anmeldenummer: 98403316.7
(22) Anmeldetag: 28.12.1998
(51) Int. Cl.: C03B 37/027

(54) **Vorrichtung und Verfahren zum Herstellen einer optischen Faser**

(30) Priorität: 20.01.1998 DE 19801894
(71) Anmelder: ALCATEL, 75008 Paris (FR)
(72) Erfinder: Lysson, Hans-Jürgen, 41352 Kirschenbroich (DE); Broden, Reiner, 41061 Mönchengladbach (DE); Lisse, Frank Dr., 50769 Köln (DE)
(74) Vertreter: Mende, Dirk

(57) **Zusammenfassung**

Zum Herstellen einer optischen Faser (5) wird ein Glaskörper (3) in einen Ziehofen (1) eingebracht, an seinem einen Ende auf Ziehtemperatur erwärmt und zur Faser (5) ausgezogen. Die Faser (5) wird in einer eine Kühlstrecke (11) aufweisenden Kühleinrichtung (7) abgekühlt. Auf die abgekühlte Faser (5) wird in einer Beschichtungseinrichtung (15) zumindest eine Beschichtung aufgebracht. Um auch bei hohen Ziehgeschwindigkeiten eine wirkungsvolle Abkühlung der optischen Faser (5) in der Kühleinrichtung (7) zu gewährleisten, wird die Faser (5) vor ihrem Eintritt in die Kühlstrecke (11) durch eine mit einem unter Überdruck stehenden Gas gefüllte Abstreifkammer (9) hindurchgeführt und die von der Faser (5) mitgeführte Gashülle abgestreift.

## Beschreibung

Die Erfindung betrifft eine Vorrichtung zum Herstellen einer optischen Faser mit einem Ziehofen, einer eine Kühlstrecke aufweisenden Kühleinrichtung sowie einer Beschichtungseinrichtung, bzw. ein Verfahren zum Herstellen einer optischen Faser, bei dem ein Glaskörper in einen Ziehofen eingebracht, an seinem einen Ende auf Ziehtemperatur erwärmt und zur Faser ausgezogen wird, die Faser in einer eine Kühlstrecke aufweisenden Kühleinrichtung abgekühlt und auf die abgekühlte Faser zumindest eine Beschichtung aufgebracht wird.

Bei der Herstellung einer optischen Faser aus einer Glasvorform wird die empfindliche Faser nach dem Ziehen mit einer ein- oder mehrschichtigen Beschichtung versehen. Diese Beschichtung dient dazu, die Faser vor mechanischen Beschädigungen zu schützen. Für das Aufbringen der Beschichtung auf die Faser ist es erforderlich, die Faser zuvor von einer Temperatur von annähernd 2000°C, die sie unmittelbar nach dem Ziehprozeß aufweist, auf unter 100°C abzukühlen. Um eine hohe Fertigungsgeschwindigkeit zu ermöglichen und eine ausreichende Abkühlung der Faser vor dem Aufbringen ihrer Beschichtung zu gewährleisten, wird daher zwischen dem Ziehofen und einer nachfolgenden Beschichtungseinrichtung eine Kühleinrichtung angeordnet.

Diese Kühleinrichtung weist üblicherweise ein Kühlrohr auf, in dessen Innenraum ein Gas hoher Wärmeleitfähigkeit, beispielsweise Helium, an der Glasfaser entlanggeleitet wird. Zur Erhöhung der Wärmeabfuhr von der durch das Kühlrohr hindurchgeführten Faser kann das Kühlrohr von einem Mantelrohr konzentrisch umgeben sein, wobei durch den zwischen Kühlrohr und Mantelrohr gebildeten, einen ringförmigen Querschnitt aufweisenden Kühlkanal Kühlwasser oder ein anderes Kühlmedium geleitet wird. Der kühlende Gasstrom leitet die Wärme von der Glasfaser an die wassergekühlte Wand des Kühlrohres ab, von wo aus sie durch das Kühlwasser abgeführt wird.

Bei Verwendung eines Gases mit einer niedrigeren Dichte als Luft erfolgt die Einspeisung des Gases in das Innere des Kühlrohres sinnvollerweise nahe dem Austritt der Faser aus dem Kühlrohr. Durch den Auftrieb des Gases im Kühlrohr wird bei niedrigen Ziehgeschwindigkeiten die von der Faser mitgeführte und die Faser umschließende Gashülle, die im wesentlichen aus Raumluft besteht, aber auch Argon, Stickstoff und andere Gase enthalten kann, im Gegenstromverfahren entfernt. Bei höheren Ziehgeschwindigkeiten ist jedoch eine ausreichende Abkühlung der das Kühlrohr durchlaufenden Faser nicht immer gewährleistet. Der Grund hierfür ist, daß bei hohen Ziehgeschwindigkeiten allein durch den Auftrieb des zur Kühlung verwendeten Gases die von der Faser mitgeführte Gashülle nicht in ausreichendem Maße abgestreift werden kann. Dabei kommt es zu einer Verdünnung des Kühlgases durch die von der Faser mitgeführten Gase. Hierdurch verschlechtert sich die Wärmeabfuhr von der Faser, so daß zur Sicherstellung einer ausreichenden Abkühlung der Faser vor dem Aufbringen der Beschichtung die Länge des Kühlrohres und die das Kühlrohr durchströmende Gasmenge wesentlich vergrößert werden müßten. Dies führt aber zu einem höheren Platzbedarf der Herstellvorrichtung bzw. zu einem hohen Verbrauch des zur Kühlung und Spülung verwendeten Gases, was unbedingt zu vermeiden ist.

In der GB 2 226 310 A1 ist die Herstellung einer optischen Faser beschrieben, bei der die von der abzukühlenden Faser mitgeführte Gashülle vor dem Eintritt in die Kühlstrecke durch einen der Durchlaufrichtung der Faser entgegengerichteten Spülgasstrom abgestreift werden soll. Aber auch diese Maßnahme kann bei hohen Ziehgeschwindigkeiten nicht immer eine ausreichende Abkühlung der Faser sicherstellen.

Ausgehend von diesem Stand der Technik liegt der Erfindung das Problem zugrunde, eine aus einer Glasform gezogene optische Faser auch bei hohen Fertigungsgeschwindigkeiten und einer kurzen Kühlstrecke zuverlässig auf eine für die nachfolgende Beschichtung der Faser unkritische Temperatur abzukühlen.

Dieses Problem wird durch die Erfindung gelöst, indem in Durchlaufrichtung der Faser vor der Kühlstrecke eine mit einem unter Überdruck stehenden Gas gefüllte Abstreifkammer vorgesehen ist bzw. indem die Faser vor ihrem Eintritt in die Kühlstrecke durch eine mit einem unter Überdruck stehenden Gas gefüllte Abstreifkammer hindurchgeführt wird.

Die durch die Erfindung erzielbaren Vorteile bestehen insbesondere darin, daß beim Durchlauf der Faser durch die Abstreifkammer auch bei hohen Ziehgeschwindigkeiten von z. B. 600 m pro Minute die von der Faser mitgeführte Gashülle noch vor dem Eintritt der Faser in die Kühlstrecke zuverlässig entfernt werden kann. Das Abstreifen der von der Faser mitgeführten Gashülle, die als wesentliche Bestandteile in der Regel Raumluft sowie Gase wie Argon und Stickstoff aufweist, verhindert eine Verdünnung des zur Wärmeabfuhr von der Faser verwendeten Gases und ermöglicht eine sehr effektive Wärmeabfuhr von der Faser. Die erfindungsgemäße Vorrichtung ist einfach und kostengünstig herstellbar und reduziert den für eine ausreichende Abkühlung der Faser erforderlichen Platzbedarf der Kühlstrecke, so daß bei einer Erhöhung der Fertigungsgeschwindigkeit auf teure Umbaumaßnahmen verzichtet werden kann. Zudem ist zum wirkungsvollen Abstreifen der von der Faser mitgeführten Gashülle und zum ausreichenden Abkühlen der Faser nur eine vergleichsweise geringe Gasmenge erforderlich, so daß sich ein niedriger Gasverbrauch und damit niedrige Betriebskosten für die Herstellung der Faser ergeben.

Durch die in den Unteransprüchen aufgeführten Merkmale sind vorteilhafte Weiterbildungen und Verbesserungen der Erfindung möglich.

Vorteilhaft ist es, wenn die Abstreifkammer an ihrem der Kühlstrecke abgewandten Ende durch eine eine Blendenöffnung aufweisende Blende abgeschlossen ist, so daß der Druckaufbau in der Abstreifkammer erleichtert und die Abstreifwirkung verbessert wird und der Verbrauch des zum Abstreifen verwendeten Gases gering ist.

Für ein wirkungsvolles Abstreifen der von der Faser mitgeführten Gashülle ist es besonders vorteilhaft, wenn die Blende zumindest in einem Bereich kegelstumpfförmig ausgebildet ist und sich in der der Durchlaufrichtung der Faser entgegengesetzten Richtung verjüngt. Dabei ist es insbesondere von Vorteil, wenn der kegelstumpfförmig ausgebildete Bereich unmittelbar an die Blendenöffnung angrenzt.

Für einen einfachen Druckaufbau in der Abstreifkammer und einen geringen Gasverbrauch ist es von Vorteil, wenn die z. B. rohrförmig ausgebildete Kühlstrecke eine kleine lichte Weite von weniger als 15 mm aufweist. Zudem wird durch diese Maßnahme die Effektivität der Kühlung verbessert.

Aus dem gleichen Grund ist es ebenfalls von Vorteil, wenn die lichte Weite der Blendenöffnung weniger als 5 mm beträgt und die Abstreifkammer eine kleine lichte Weite aufweist, die vorteilhafterweise der lichten Weite der Kühlstrecke entspricht.

Haben Kühlstrecke, Abstreifkammer oder Blendenöffnung einen kreisförmigen freien Querschnitt, so entspricht die lichte Weite dem Durchmesser des jeweiligen freien Querschnitts.

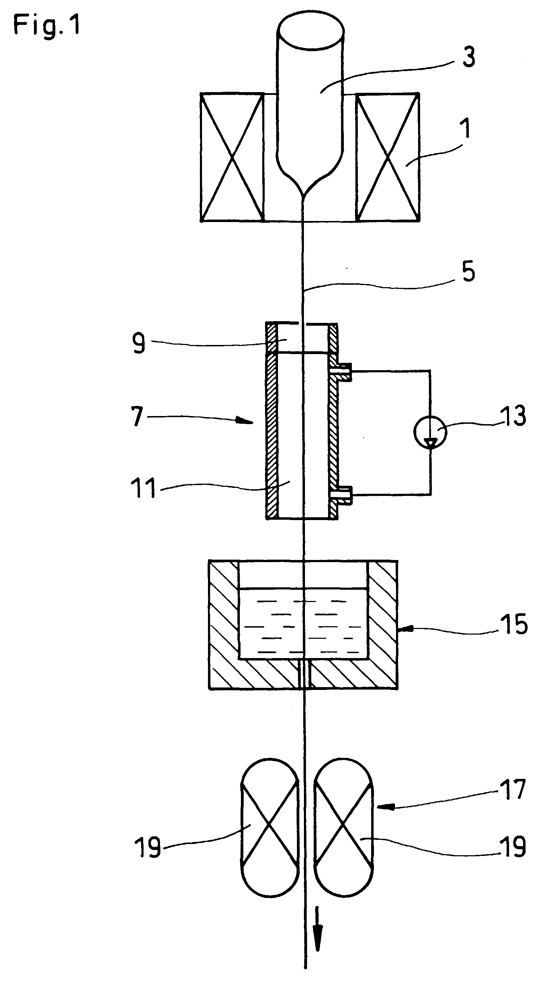

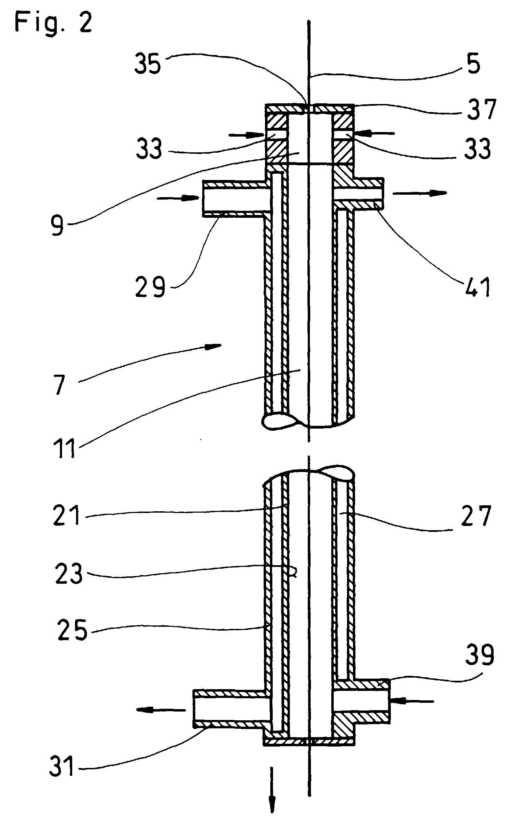

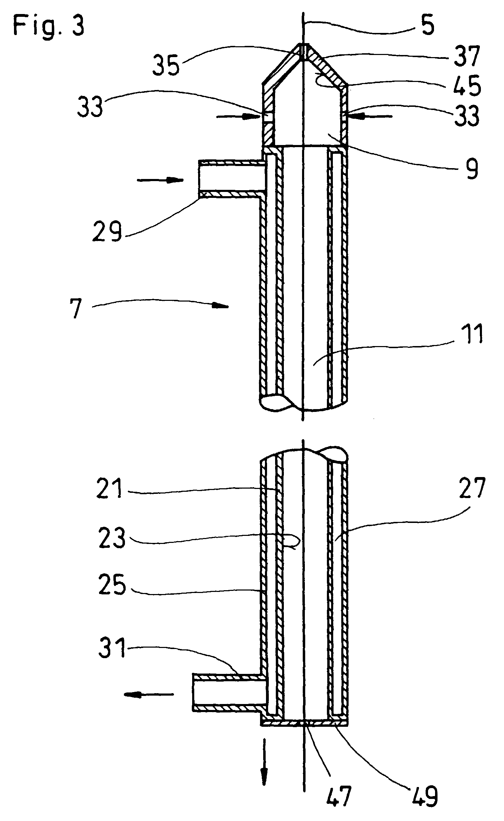

Ausführungsbeispiele der Erfindung sind in der Zeichnung vereinfacht dargestellt und in der nachfolgenden Beschreibung näher erläutert. Es zeigen die Fig. 1 ein erstes erfindungsgemäßes Ausführungsbeispiel der Vorrichtung, Fig. 2 eine vergrößerte Darstellung der in der Fig. 1 gezeigten Kühleinrichtung sowie Fig. 3 ein zweites erfindungsgemäßes Ausführungsbeispiel einer Kühleinrichtung.

Die in der Fig. 1 beispielhaft dargestellte Vorrichtung zum Herstellen einer optischen Faser weist einen Ziehofen 1 auf, in dem das eine Ende eines Glaskörpers 3, der üblicherweise auch als Preform bezeichnet wird, auf Ziehtemperatur erwärmt wird. Diese Ziehtemperatur entspricht der Schmelztemperatur des Glaskörpers 3 und liegt bei annähernd 2000°C. Aus dem aufgeschmolzenen Ende des Glaskörpers 3 wird eine optische Faser 5 ausgezogen und durch eine Kühlstrecke 11 einer Kühleinrichtung 7 hindurchgeführt. In Durchlaufrichtung der optischen Faser 5 ist vor ihrem Eintritt in die Kühlstrecke 11 der Kühleinrichtung 7 eine in der Fig. 1 nur angedeutete Abstreifkammer 9 vorgesehen, die bei diesem Ausführungsbeispiel in die Kühleinrichtung 7 integriert ist. In der beispielsweise rohrförmig ausgebildeten Kühlstrecke 11 wird ein Gas, das eine hohe Wärmeleitfähigkeit und z. B. eine geringere Dichte als Luft aufweist, beispielsweise Helium, an der durch die Kühlstrecke 11 hindurchgeführten Faser 5 im Gegenstrom, d. h. in der Durchlaufrichtung der Faser 5 entgegengesetzter Richtung, entlanggeleitet. Das für die Abkühlung der Faser 5 verwendete Gas wird z. B. an dem der Abstreifkammer 9 abgewandten Ende der Kühlstrecke 11 in diese zugeführt und an dem der Abstreifkammer 9 zugewandten Ende der Kühlstrecke 11 aus dieser mittels einer Pumpe 13 abgesaugt.

An die Kühleinrichtung 7 schließt sich in Durchlaufrichtung der optischen Faser 5 eine Beschichtungseinrichtung 15 an, die in der Fig. 1 in vereinfachter Form als Beschichtungstopf dargestellt ist. In der Beschichtungseinrichtung 15 wird eine die optische Faser 5 vor mechanischen Beschädigungen schützende Beschichtung auf die Faser 5 aufgebracht. Bei dem Beschichtungsmaterial handelt es sich beispielsweise um einen durch UV-Licht aushärtbaren Lack, der in einer nachfolgenden Aushärteeinrichtung 17 mittels UV-Lampen 19 ausgehärtet wird. Es ist selbstverständlich ebenfalls möglich, eine aus mehreren Schichten unterschiedlicher Eigenschaften und gegebenenfalls unterschiedlicher Farbe bestehende Beschichtung auf die Faser 5 aufzubringen.

Die Fig. 2 zeigt eine vergrößerte Ansicht der in der Fig. 1 dargestellten Kühleinrichtung 7 mit der in Durchlaufrichtung der Faser 5 unmittelbar vor der Kühlstrecke 11 angeordneten Abstreifkammer 9. Die Kühlstrecke 11 wird bei diesem Ausführungsbeispiel durch ein einen kreisförmigen freien Querschnitt aufweisendes Kühlrohr 21 mit einer sich in Längsrichtung erstreckenden Durchgangsbohrung 23 und ein dieses mit Abstand konzentrisch umgebendes Mantelrohr 25 gebildet. Die optische Faser 5 wird durch die Durchgangsbohrung 23 des Kühlrohres 21 hindurchgeführt und durch das in der Durchgangsbohrung 23 entgegen ihrer Durchlaufrichtung an der Faser vorbeistreichende Gas hoher Wärmeleitfähigkeit durch Wärmeabfuhr abgekühlt. Zwischen Kühlrohr 21 und Mantelrohr 25 ist ein einen z. B. kreisringförmigen freien Querschnitt aufweisender Kühlmittelraum 27 gebildet, durch den ein Kühlmittel, beispielsweise eine Kühlflüssigkeit, hindurchgeleitet wird. Zu diesem Zweck ist der Kühlmittelraum 27 an seinem der Abstreifkammer 9 zugewandten Ende mit einem Eintrittsstutzen 29 und an seinem der Abstreifkammer 9 abgewandten anderen Ende mit einem Austrittsstutzen 31 versehen. Das durch den Kühlmittelraum 27 strömende Kühlmittel dient zur Kühlung der Wandung des Kühlrohres 21 und führt einen Teil der vom dem an der Faser 5 entlangströmenden Gas aufgenommenen Wärme ab.

Die bei diesem Ausführungsbeispiel zylindrische Abstreifkammer 9, die beispielsweise den gleichen Innendurchmesser bzw. die gleiche lichte Weite wie das Kühlrohr 21 aufweist, hat z. B. zwei sich durch ihre Wandung hindurch erstreckende Eintrittsbohrungen 33, durch die ein Gas zum Abstreifen der von der optischen Faser 5 mitgeführten Gashülle zugeführt werden kann. Bei diesem Gas handelt es sich zweckmäßigerweise um das gleiche Gas wie es auch zum Abkühlen der Faser 5 verwendet wird. An dem Eintritt der optischen Faser 5 in die Abstreifkammer 9 ist eine eine zentrale Blendenöffnung 35 aufweisende Blende 37 angeordnet, die zudem die Abstreifkammer 9 an ihrem der Kühlstrecke 11 abgewandten Ende abschließt. Die zylindrische Wandung der Abstreifkammer 9 und die Blende 37 können auch als gemeinsames Bauteil ausgebildet sein. Die optische Faser 5 tritt durch die Blendenöffnung 35, die beispielsweise einen kreisförmigen Querschnitt mit einer lichten Weite bzw. einem Durchmesser von weniger als 5 mm, z. B. 3 mm aufweist, in die Abstreifkammer 9 ein. Das Gas wird durch die Eintrittsbohrungen 33 unter Druck stehend in die Abstreifkammer 9 zugeführt, so daß sich in der Abstreifkammer 9 ein Überdruck aufbaut, der auch bei hohen Faserziehgeschwindigkeiten ein zuverlässiges Abstreifen der von der optischen Faser 5 mitgeführten Gashülle gewährleistet. Die Durchgangsbohrung 23 des Kühlrohrs 21 weist bei diesem Ausführungsbeispiel ebenso wie die Abstreifkammer 9 eine vergleichsweise kleine lichte Weite von z. B. 12 mm auf. Die enge Durchgangsbohrung 23 und die enge Abstreifkammer 9 erleichtern den Druckaufbau in der Abstreifkammer 9, unterstützen den Kühleffekt durch einen besseren Wärmeübergang auf das den Kühlmittelraum 27 durchströmende Kühlmittel und vermeiden im Kühlrohr 21 aufgrund von freier Konvektion entstehende Turbulenzen. Das in der Abstreifkammer 9 unter Überdruck stehende Gas tritt zum überwiegenden Teil mit hoher Strömungsgeschwindigkeit im Gegenstrom durch die enge Blendenöffnung 35 der Blende 37 aus und entfernt die von der optischen Faser 5 mitgeführte Gashülle zuverlässig. Die Faser 5 führt beim Austritt aus der Abstreifkammer 9 nahezu ausschließlich das zum Abstreifen verwendete Gas mit sich, so daß eine wirkungsvolle Abkühlung der optischen Faser 5 beim Durchlauf durch die Kühlstrecke 11 sichergestellt ist. Das zur Kühlung verwendete Gas wird an dem der Abstreifkammer 9 abgewandten Ende der Kühlstrecke 11 mittels eines Zufuhrstutzens 39 in die Durchgangsbohrung 23 des Kühlrohres 21 eingebracht und an dem der Abstreifkammer 9 zugewandten Ende der Kühlstrecke 11 mittels eines Absaugstutzens 41 aus der Durchgangsbohrung 23 des Kühlrohres 21 abgesaugt. Als Gas eignet sich insbesondere ein eine geringere Dichte als Luft aufweisendes Gas wie z. B. Helium. Es kann aber auch ein anderes Gas oder ein Gasgemisch verwendet werden.

Das in der Fig. 3 dargestellte Ausführungsbeispiel von Abstreifkammer 9 und Kühleinrichtung 7 unterscheidet sich von dem in den Fig. 1 und 2 dargestellten Ausführungsbeispiel im wesentlichen lediglich durch die Art der Ausbildung der Blende 37 sowie durch das Fehlen von Zufuhrstutzen 39 und Absaugstutzen 41. Die Blende 37 ist bei diesem Ausführungsbeispiel in die Wandung der Abstreifkammer 9 integriert und kegelstumpfförmig ausgebildet, wobei sie sich in der der Durchlaufrichtung der Faser 5 entgegengesetzten Richtung kegelstumpfförmig verjüngt. Dabei erstreckt sich der kegelstumpfförmige Bereich 45 bis unmittelbar an die Blendenöffnung 35. Das Gas wird unter Druck durch die beiden Eintrittsbohrungen 33 in die Abstreifkammer 9 zugeführt, so daß sich in der Abstreifkammer 9 ein Überdruck aufbaut. Von dort strömt das Gas zu einem Teil in der Durchlaufrichtung der optischen Faser 5 entgegengesetzter Richtung durch die Blendenöffnung 35 und streift dabei im Gegenstrom die von der Faser 5 mitgeführte Gashülle ab. Durch die sich kegelstumpfförmig verjüngende Blende 37 weist das Gas eine in radialer Richtung nach innen gerichtete Komponente auf, die den Abstreifeffekt fördert. Der andere Teil des in die Abstreifkammer 9 zugeführten Gases durchströmt in Durchlaufrichtung der optischen Faser 5 die Durchgangsbohrung 23 des Kühlrohrs 21, gibt dabei die von der Faser 5 aufgenommene Wärme über die Wandung des Kühlrohres 21 an das in dem Kühlmittelraum 27 befindliche Kühlmittel ab und tritt dann an dem der Abstreifkammer 9 abgewandten Ende der Kühlstrecke 11 durch eine Blendenöffnung 47 einer weiteren Blende 49 aus. Diese Blendenöffnung 47 weist ebenfalls einen engen Querschnitt, z. B. eine lichte Weite von 3 mm auf. Zur Vermeidung von Wiederholungen wird im übrigen auf die Beschreibung des in den Fig. 1 und 2 dargestellten ersten Ausführungsbeispiels hingewiesen.

## Patentansprüche

1. Vorrichtung zum Herstellen einer optischen Faser (5) mit einem Ziehofen (1), einer eine Kühlstrecke (11) aufweisenden Kühleinrichtung (7) sowie einer Beschichtungseinrichtung (15)**, dadurch gekennzeichnet**, daß in Durchlaufrichtung der Faser (5) vor der Kühlstrecke (11) eine mit einem unter Überdruck stehenden Gas gefüllte Abstreifkammer (9) vorgesehen ist.

2. Vorrichtung nach Anspruch 1, **dadurch gekennzeichnet**, daß die Abstreifkammer (9) an ihrem der Kühlstrecke (11) abgewandten Ende durch eine eine Blendenöffnung (35) aufweisende Blende (37) abgeschlossen ist.

3. Vorrichtung nach Anspruch 2, **dadurch gekennzeichnet**, daß die Blende (37) zumindest in einem Bereich (45) kegelstumpfförmig ausgebildet ist und sich in der der Durchlaufrichtung der Faser (5) entgegengesetzten Richtung verjüngt.

4. Vorrichtung nach Anspruch 3, **dadurch gekennzeichne**t, daß der kegelstumpfförmig ausgebildete Bereich (45) unmittelbar an die Blendenöffnung (35) angrenzt.

5. Vorrichtung nach einem der Ansprüche 1 bis 4, **dadurch gekennzeichnet,** daß die Kühlstrecke (11) rohrförmig ausgebildet ist und die lichte Weite der Kühlstrecke (11) weniger als 15 mm beträgt.

6. Vorrichtung nach einem der Ansprüche 1 bis 5, **dadurch gekennzeichnet,** daß die lichte Weite der Blendenöffnung (35) weniger als 5 mm beträgt.

7. Verfahren zum Herstellen einer optischen Faser (5), bei dem ein Glaskörper (3) in einen Ziehofen (1) eingebracht, an seinem einen Ende auf Ziehtemperatur erwärmt und zur Faser (5) ausgezogen wird, die Faser (5) in einer eine Kühlstrecke (11) aufweisenden Kühleinrichtung (7) abgekühlt und auf die abgekühlte Faser (5) zumindest eine Beschichtung aufgebracht wird, **dadurch gekennzeichnet,** daß die Faser (5) vor ihrem Eintritt in die Kühlstrecke (11) durch eine mit einem unter Überdruck stehenden Gas gefüllte Abstreifkammer (9) hindurchgeführt wird.

8. Verfahren nach Anspruch 7, **dadurch gekennzeichnet**, daß als Spülgas ein eine geringere Dichte als Luft aufweisendes Gas verwendet wird.
